# EUROPEAN PATENT SPECIFICATION

(11) **EP 0 516 363 B1**
(45) Date of publication and mention of the grant of the patent: **07.01.1999**
(21) Application number: 92304730.2
(22) Date of filing: 26.05.1992
(51) Int. Cl.: H04B 10/16

(54) **Optical amplifying apparatus**
Optischer Verstärker
Appareil d'amplification optique

(30) Priority: 27.05.1991 JP 149314/91
(43) Date of publication of application: 02.12.1992
(73) Proprietor: THE FURUKAWA ELECTRIC CO., LTD., Tokyo 100 (JP)
(72) Inventor: Nakamura, Kazunori, Kanagawa-ku Yokohama-shi (JP); Tei, I Kou, Ontario, K2G 5G2 (CA)
(74) Representative: Gibson, Stewart Harry

(56) References cited:
- EP-A- 0 415 438
- EP-A- 0 445 364
- EP-A- 0 467 080
- PATENT ABSTRACTS OF JAPAN vol. 15, no. 54 (E-1031)8 February 1991 & JP-A-2 281 774 ( NTT )
- PATENT ABSTRACTS OF JAPAN vol. 14, no. 136 (P-1021)14 March 1990 & JP-A-2 002 532 ( OKI ELECTRIC IND CO )

## Description

### Description for the following Contracting State : ES

### BACKGROUND OF THE INVENTION

### [Field of the Invention]

This invention relates to an improvement to an optical amplifying apparatus comprising optical transmission lines, optical amplifiers, optical isolators and other components.

### [Prior Art]

Optical amplifying apparatuses using optical fibers having an optical amplification capability and laser amplifiers have been known and utilized as means for switching optical transmission lines in optical CATV systems and other practical applications.

There has been reported that light of 1.55µm band can be effectively amplified by using a silica-type single mode optical fiber having an erbium (Er)-doped core in an optical amplification system of the above described type.

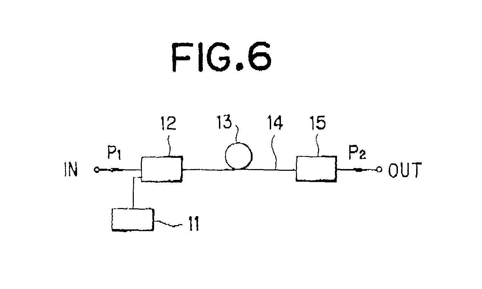

As illustrated in Fig. 6 of the accompanying drawings, an optical amplifying apparatus under consideration normally comprises a pumping source 11 for optical pumping, an optical combiner 12 for combining optical signals and pumped light and an optical fiber type optical amplifier 13 having a rare earth element-doped core connected to an optical transmission line 14, to which an optical isolator 15 is added.

An optical transmission system comprising an optical amplifying apparatus as illustrated in Fig. 6 normally has a number of nodes connecting different optical transmission lines or those connecting optical transmission lines and various pieces of optical equipment.

Nodes of an optical transmission system can reflect signal light if mismatches of interfaces exist there and, consequently, certain optical amplifiers of the system can be caused to oscillate and malfunction by the reflected light.

Thus, it is of vital importance for an optical amplifying system as illustrated in Fig. 6 to be able to effectively avoid unstable operation and oscillation of any of its optical amplifiers due to reflection of light in order to achieve a large gain.

The optical isolator 15 of the apparatus of Fig. 6 is connected to one or both ends of the optical amplifier 13 in order to suppress any possible oscillation of the optical amplifier 13 due to reflection of light.

The optical isolator 15 typically comprises an optical device having no polarization dependency and shows a level of attenuation of retrogressive light between 20 and 60dB.

An optical transmission system comprising an optical isolator 15 connected to the optical transmission line 14 as illustrated in Fig. 6 has certain drawbacks as described below.

Firstly, it cannot be used for optical signal transmission in the reverse direction and therefore is not good for bidirectional telecommunication.

Secondly, it is not compatible with a so-called optical time domain reflection (OTDR) method for detecting any malfunctioning points in the optical transmission system and testing and monitoring its operation.

OTDR is a method with which pulsed signal light p1 is introduced into the optical transmission line 14 by way of its input terminal and the retrogressive light p2 generated by the signal light p1 such as backscattering light or backreflecting light is observed at the input terminal of the optical transmission line 14 for changes with time to detect any existing malfunctioning points in the optical transmission system. However, when an optical isolator 15 is connected in series with the optical amplifier 13 as illustrated in Fig. 6, the retrogressive light p2 is attenuated by the optical isolator to an extent of 20 to 60dB and cannot reach the input terminal of the optical transmission line 14.

Thus, various measuring methods that utilize retrogressive light are not compatible with known optical transmission system comprising optical isolators 15.

In view of the above technological problem, it is therefore an object of the present invention to provide an optical amplifying apparatus that comprises an optical isolator and can be used for bidirectional telecommunication and measurement and monitoring of various types utilizing retrogressive light.

### SUMMARY OF THE INVENTION

According to the invention, there is provided an optical amplifying apparatus comprising an input terminal, an output terminal, an optical transmission line connected between the input and output terminals, an optical amplifier connected in the optical transmission line for amplifying a light signal received on the input terminal, and an optical isolator connected in the optical transmission line for suppressing oscillation of the optical amplifier caused by any reflected light signal, characterised in that an optical circulator is connected in said optical transmission line adjacent the output terminal, the optical circulator being arranged to pass the amplified input light signal to the output terminal and further arranged to pass the reflected light signal to an optical transmission line which bypasses the optical amplifier and optical isolator.

An optical pumping unit for pumping signal light for the purpose of the present invention may be connected upstream of the optical amplifier on the optical transmission line.

Said optical pumping unit for pumping signal light may comprise a pumping source for generating pumped light, a drive circuit for driving the pumping source and an optical combiner for feeding pumped light to the optical amplifier.

Alternatively, an optical pumping unit may be connected to the optical circulator adjacent the output terminal of the apparatus, to pass pumped signal light to the amplifier via the transmission line.

Said optical pumping unit connected to the optical circulator may comprise a pumping source for generating pumped light and a drive circuit for driving the pumping source.

If optical circulators are respectively disposed on the input and output terminal sides of the optical transmission line of such an optical amplifying apparatus, signal light transmitted from the input terminal to the output terminal of the optical transmission line is amplified by the optical amplifier after passing through the optical circulator on the input terminal side and then passes through that optical isolator and then through the optical circulator on the output terminal side.

On the other hand, retrogressive light passes through the optical circulator on the output terminal side and then through the optical circulator on the input terminal side before getting to the input terminal of the optical transmission line without passing through the optical isolator.

Thus, it will be seen that signal light and retrogressive light can be independently isolated and combined together in an optical amplifying apparatus having a configuration as described above.

Now, the present invention will be described in greater detail by referring to the accompanying drawings that illustrate preferred embodiments of the invention.

### BRIEF DESCRIPTION OF THE DRAWINGS

Fig. 1 is a block diagram of a preferred embodiment of the invention.

Fig. 2 is a schematic view of an optical device used in the embodiment of Fig. 1.

Fig. 3 is a graph showing the result of an experiment using the embodiment of Fig. 1 and a conventional optical amplifying apparatus along with an OTDR method.

Fig. 4 is a block diagram of another preferred embodiment of the invention.

Fig. 5 is a block diagram of still another preferred embodiment of the invention.

Fig. 6 is a block diagram of a conventional optical amplifying apparatus.

### DETAILED DESCRIPTION OF THE INVENTION

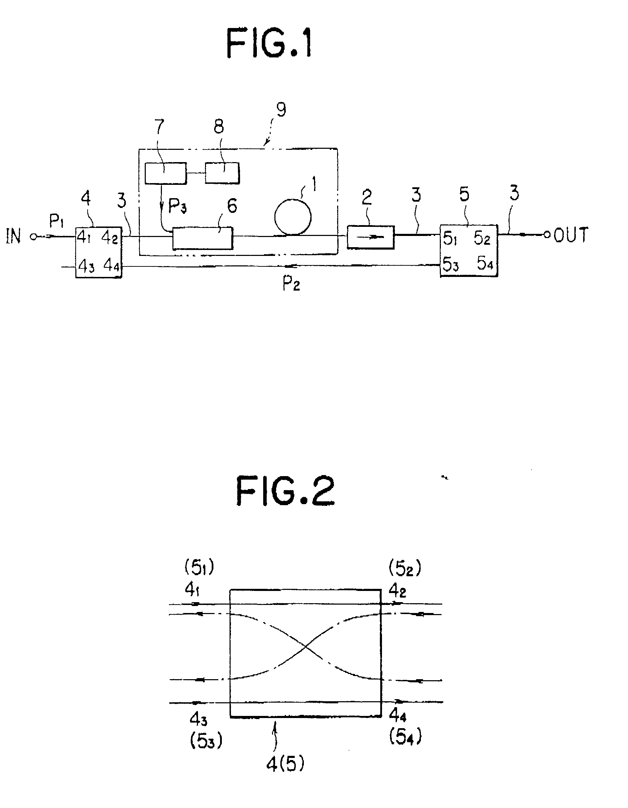

A first preferred embodiment of the invention will be described by referring to Fig. 1.

As shown in Fig. 1, the embodiment comprises an optical amplifier 1, an optical isolator 2 for suppressing oscillation of the optical amplifier caused by reflected signal light, an optical transmission line 3 for conveying light signal, optical devices 4, 5 for independently isolating and combining signal light and retrogressive light, an optical combiner 6 for combining signal light and pumped light, a pumping source 7 for optical amplification and a drive circuit 8 for driving the pumping source 7.

Of the above listed components, the optical amplifier 1, the optical combiner 6, the pumping source 7 and the drive circuit 8 constitute an optical amplifying unit 9.

The optical amplifier 1 may comprise an optical waveguide for optical amplification as illustrated in Fig. 1 or a known conventional laser amplifier (not shown).

An optical waveguide for optical amplification to be used for the optical amplifier 1 is typically a single mode optical fiber of a silica or fluoride-type comprising a core and a clad which are covered by a plastic layer.

The core of an optical waveguide to be used for the purpose of the invention is made of silica- or fluoride-type host glass which is doped with one or more than one rare earth elements such as erbium (Er) and neodymium (Nd). Additionally, one or more than one substances selected from a group of substances including alkaline earth elements such as beryllium (Be), oxides of yittrium-aluminum-garnet (YAG) alloys, oxides of yittrium-lanthanoid-fluorine (YLF) alloys, transition metal ions may be used for doping the host glass.

Alternatively, the core of the optical waveguide may be made of fluoride glass of an erbium- or neodymium-doped ZBLAN (ZrF₄-BaF₂-LaF₃-NaF) type or containing independently BaF₂, AlF₃ and/or NdF₃.

The clad layer of the optical waveguide is also made of silica- or fluoride type glass containing one or more than one doping substances as described above and obviously has a refractive index smaller than that of the core.

The optical isolator 2 is an optical device having no polarization dependency that can effectively suppress oscillation of the amplifier as described above.

The optical transmission line 3 may be an optical fiber of known type such as a silica- or fluoride type.

The optical devices 4, 5 are typically optical circulators comprising respectively a plurality of input/output ports 4₁-4₄ and 5₁-5₄ as illustrated in Fig. 2.

As seen from Fig. 2, the incident light that enters the optical device 4 through the port 4₁ goes out from the port 4₂ and the light that enters the device through the port 4₃ goes out from the port 4₄ whereas the light that enters the optical device 4 through the port 4₂ goes out from the port 4₃ and the light that enters the device through the port 4₄ goes out from the port 4₁.

Similarly, the incident light that enters the optical device 5 through the port 5₁ goes out from the port 5₂ and the light that enters the device through the port 5₃ goes out from the port 5₄ whereas the light that enters the optical device 5 through the port 5₂ goes out from the port 5₃ and the light that enters the device through the port 5₄ goes out from the port 5₁.

The optical combiner 6 comprises an optical coupler such as a wave division module (WDM) for combining signal light and pumped light.

The pumping source 7 typically comprises a semiconductor laser capable of oscillating to emit light with a required frequency band such as a 0.8µm band, 0.98µm band or 1.48µm band.

The optical amplifying apparatus as illustrated in Fig. 1 comprises a transmission route for signal light p1 from the input terminal (shown at the leftmost end) to the output terminal (shown at the rightmost end) of an optical transmission line 3 by way of ports 4₁ and 4₂ of an optical device 4, an optical combiner 6, an optical amplifier 1, an optical isolator 2 and two ports 5₁ and 5₂ of another optical device 5 and a transmission route for retrogressive light p2 from the output terminal (shown at the rightmost end) to the input terminal (shown at the leftmost end) of the optical transmission line 3 by way of ports 5₂ and 5₃ of an optical device 5 and two ports 4₄ and 4₁ of the optical device 4.

With an optical amplifying apparatus as illustrated in Fig. 1, signal light p1 entering from the input terminal of the optical transmission line 3 proceeds through the port 4₁, the inside of the optical device 4, the port 4₂, the optical combiner 6, the optical amplifier 1, the optical isolator 2, the port 5₁, the inside of the optical device 5 and the port 5₁ and goes out from the output terminal of the optical transmission line 3.

As signal light p1 passes through these components of the optical transmission line 3, pumped light p3 coming from the pumping source 7 which is driven (lit) by the drive circuit 8 enters the optical transmission line 3 by way of the optical combiner 6 to excite the optical amplifier 1 so that the signal light p1 passing through the optical amplifier is amplified by the latter.

On the other hand, retrogressive light p2 that proceeds in a direction opposite to that of signal light p1 passes the output terminal of the optical transmission line 3, the port 5₂, the inside of the optical device 5, the port 5₃, the port 4₄, the inside of the optical device 4 and the port 4₁ before it enters the input terminal of the optical transmission line 3 without passing through the optical isolator 2.

Consequently, signal light p1 and retrogressive light p2 can be independently isolated and combined by an optical amplifying apparatus as illustrated in Fig. 1.

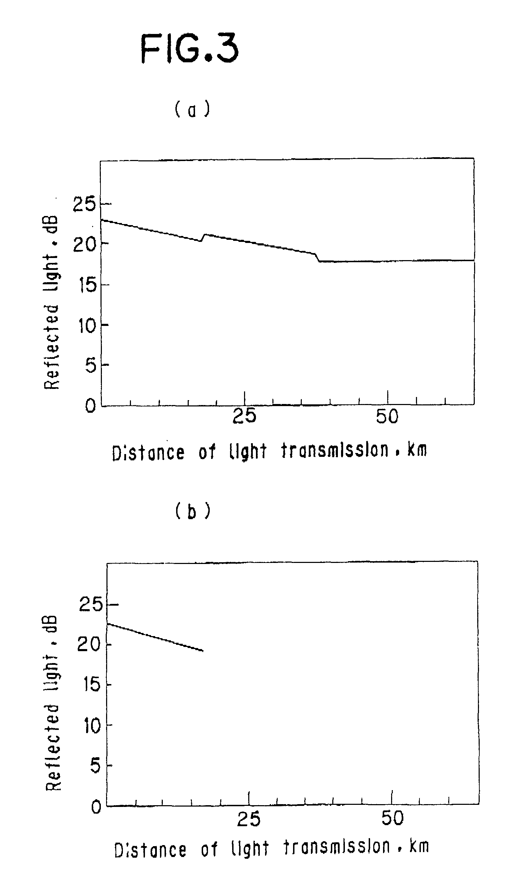

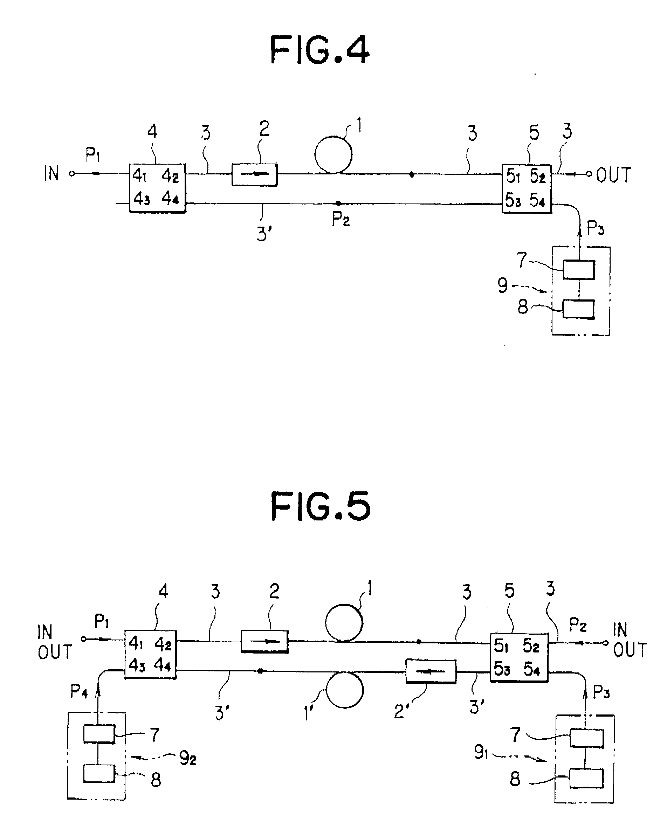

Figs. 3(a) and 3(b) are graphs showing the result of an experiment using the embodiment of Fig. 1 and a conventional optical amplifying apparatus as illustrated in Fig. 5 along with an OTDR method.

In Figs. 3(a) and 3(b), the axis of ordinate represents the amount of returned light (dB) and that of ordinate represents the distance by which light is transmitted (km).

The unit of the ordinate (1 bit: 5dB) is a certain reference value.

For the experiment, an OTDR apparatus, a 17km long single mode optical fiber (having a core with a refractive index of 1.463000), an optical amplifying apparatus and a 20km long single mode optical fiber (having a core with a refractive index the same as that of the first optical fiber) were connected in the described order and ordinary procedures of measurement were followed.

The incoming light used for the experiment had a wavelength of 1.5µm and a distance of transmission of approximately 64km.

When the OTDR method was used with an optical amplifying apparatus of Fig. 1, the condition of the optical fiber connected downstream to the optical amplifying apparatus could be determined as illustrated in Fig. 3(a). This is because the optical amplifying apparatus of

Fig. 1 comprises optical devices 4, 5 and therefore retrogressive light p2 can be transmitted to the input terminal of the optical transmission line 3 regardless of the existence of an optical isolator 2.

When the OTDR method was used with an optical amplifying apparatus of Fig. 6, the condition of the optical fiber connected downstream to the optical amplifying apparatus could not be determined as illustrated in Fig. 3(b).

This is because the optical amplifying apparatus comprising an optical isolator is not provided with an optical circulator.

In an optical amplifying apparatus as shown in Fig. 1, an optical isolator 2 may be connected downstream to the optical device 1 and/or the optical amplifier 1 in order to reduce the reflection of signal light p1 as much as possible.

The optical device 4 connected to the input terminal of an optical amplifying apparatus of Fig. 1 may be omitted. Then, a given measuring means is connected to the port 5₃ of the optical device arranged near the output terminal of the apparatus.

Fig. 4 illustrates another preferred embodiment of the present invention.

While the optical amplifying apparatus of Fig. 4 is substantially similar to that of Fig. 1, the former differs from the latter in that an optical pumping unit 9 is connected to the port 5₄ of the optical device 5 of the former.

The optical pumping unit 9 of this embodiment does not comprise an optical combiner 6.

With an optical amplifying apparatus as illustrated in Fig. 4, signal light pi entering from the input terminal of the optical transmission line 3 proceeds through the port 4₁, the inside of the optical device 4, the port 4₂, the optical amplifier 1, the optical isolator 2, the port 5₁, the inside of the optical device 5 and the port 5₂ and goes out from the output terminal of the optical transmission line 3 in the same way as described earlier by referring to the first embodiment.

As signal light p1 passes through these components of the optical transmission line 3, pumped light p3 coming from the pumping source 7 which is driven (lit) by the drive circuit 8 enters the optical transmission line 3 by way of the port 5₄, the inside of the optical device 4 and the port 5₁ to excite the optical amplifier 1 so that the signal light p1 passing through the optical amplifier is amplified by the latter.

On the other hand, retrogressive light p2 that proceeds in a direction opposite to that of signal light p1 passes the output terminal of the optical transmission line 3, the port 5₂, the inside of the optical device 5, the port 5₃, the optical transmission line 3', the port 4₄, the inside of the optical device 4 and the port 4₁ before it enters the input terminal of the optical transmission line 3 without passing through the optical isolator 2.

Consequently, signal light p1 and retrogressive light p2 can be independently isolated and combined by an optical amplifying apparatus as illustrated in Fig. 4.

It will be apparent that the embodiment of Fig. 4 may be modified in various ways as in the case of the first embodiment of Fig. 1.

Finally, a preferred embodiment illustrated in Fig. 5 will be described.

This embodiment is realized by adding an optical amplifying means between the ports 4₄ and 5₃ of the respective optical devices 4 and 5 of the embodiment of Fig. 4 in order to give it a bidirectional amplifying capability for accommodating bidirectional telecommunication.

In the embodiment of Fig. 5, an optical amplifier 1' and an optical isolator 2' are inserted into an optical transmission path comprising the ports 4₄ and 5₃ of respective optical devices 4 and 5 and optical pumping units 9₁ and 9₂ of the above described type are connected to the ports 4₃ and 5₄ of the respective optical devices 4 and 5 to form the optical amplifying means.

With an optical amplifying apparatus as illustrated in Fig. 5, signal light p1 entering from the leftmost terminal of the optical transmission line 3 proceeds through the port 4₁, the inside of the optical device 4, the port 4₂, the optical amplifier 1, the optical isolator 2, the port 5₁, the inside of the optical device 5 and the port 5₂ and goes out from the rightmost terminal of the optical transmission line 3.

Concurrently, pumped light p3 coming from the optical pumping unit 9₁ enters the optical transmission line 3 by way of the port 5₄, the inside of the optical device 4 and the port 5₁ to excite the optical amplifier 1 so that the signal light p1 passing through the optical amplifier is amplified by the latter.

With an optical amplifying apparatus as illustrated in Fig. 5, signal light p2 entering from the rightmost terminal of the optical transmission line 3 proceeds through the port 5₂, the inside of the optical device 5, the optical transmission line 3', the optical isolator 2', the optical amplifier 1', the port 4₄, the inside of the optical device 4 and the port 4₁ and goes out from the leftmost terminal of the optical transmission line 3.

Concurrently, pumped light p4 coming from the optical pumping unit 9₂ enters the optical transmission line 3' by way of the port 4₃, the inside of the optical device 4 and the port 4₄ to excite the optical amplifier 1' so that the signal light p2 passing through the optical amplifier is amplified by the latter.

Thus, an optical amplifying apparatus as shown in Fig. 5 has a bidirectional amplifying capability to accommodate bidirectional telecommunication.

Additionally, an optical amplifying apparatus according to the invention can be appropriately used with widely known backward and double side excitation techniques.

As signal light and retrogressive light can be independently isolated and combined together in an optical amplifying apparatus according to the invention, it can be used for bidirectional telecommunication, measurement and monitoring of various optical transmission systems utilizing retrogressive light and other applications.

### Description for the following Contracting States : DE, FR, GB, IT

### BACKGROUND OF THE INVENTION

### [Field of the Invention]

This invention relates to an improvement to an optical amplifying apparatus comprising optical transmission lines, optical amplifiers, optical isolators and other components.

### [Prior Art]

Optical amplifying apparatuses using optical fibers having an optical amplification capability and laser amplifiers have been known and utilized as means for switching optical transmission lines in optical CATV systems and other practical applications.

There has been reported that light of 1.55µm band can be effectively amplified by using a silica-type single mode optical fiber having an erbium (Er)-doped core in an optical amplification system of the above described type.

As illustrated in Fig. 6 of the accompanying drawings, an optical amplifying apparatus under consideration normally comprises a pumping source 11 for optical pumping, an optical combiner 12 for combining optical signals and pumped light and an optical fiber type optical amplifier 13 having a rare earth element-doped core connected to an optical transmission line 14, to which an optical isolator 15 is added.

An optical transmission system comprising an optical amplifying apparatus as illustrated in Fig. 6 normally has a number of nodes connecting different optical transmission lines or those connecting optical transmission lines and various pieces of optical equipment.

Nodes of an optical transmission system can reflect signal light if mismatches of interfaces exist there and, consequently, certain optical amplifiers of the system can be caused to oscillate and malfunction by the reflected light.

Thus, it is of vital importance for an optical amplifying system as illustrated in Fig. 6 to be able to effectively avoid unstable operation and oscillation of any of its optical amplifiers due to reflection of light in order to achieve a large gain.

The optical isolator 15 of the apparatus of Fig. 6 is connected to one or both ends of the optical amplifier 13 in order to suppress any possible oscillation of the optical amplifier 13 due to reflection of light.

The optical isolator 15 typically comprises an optical device having no polarization dependency and shows a level of attenuation of retrogressive light between 20 and 60dB.

An optical transmission system comprising an optical isolator 15 connected to the optical transmission line 14 as illustrated in Fig. 6 has certain drawbacks as described below.

Firstly, it cannot be used for optical signal transmission in the reverse direction and therefore is not good for bidirectional telecommunication.

Secondly, it is not compatible with a so-called optical time domain reflection (OTDR) method for detecting any malfunctioning points in the optical transmission system and testing and monitoring its operation.

OTDR is a method with which pulsed signal light p1 is introduced into the optical transmission line 14 by way of its input terminal and the retrogressive light p2 generated by the signal light p1 such as backscattering light or backreflecting light is observed at the input terminal of the optical transmission line 14 for changes with time to detect any existing malfunctioning points in the optical transmission system. However, when an optical isolator 15 is connected in series with the optical amplifier 13 as illustrated in Fig. 6, the retrogressive light p2 is attenuated by the optical isolator to an extent of 20 to 60dB and cannot reach the input terminal of the optical transmission line 14.

Thus, various measuring methods that utilize retrogressive light are not compatible with known optical transmission system comprising optical isolators 15.

In view of the above technological problem, it is therefore an object of the present invention to provide an optical amplifying apparatus that comprises an optical isolator and can be used for bidirectional telecommunication and measurement and monitoring of various types utilizing retrogressive light.

### SUMMARY OF THE INVENTION

According to the invention, there is provided an optical amplifying apparatus comprising an input terminal, an output terminal, an optical transmission line connected between the input and output terminals, an optical amplifier connected in the optical transmission line for amplifying a light signal received on the input terminal, an optical pumping unit for the optical amplifier, and an optical isolator connected in the optical transmission line for suppressing oscillation of the optical amplifier caused by any reflected light signal, characterised in that an optical circulator is connected in said optical transmission line adjacent the output terminal, the optical circulator being arranged to pass the amplified input light signal to the output terminal and further arranged to pass the reflected light signal to an optical transmission line which bypasses the optical amplifier and optical Isolator, and said optical pumping unit is connected to the optical circulator, such that the optical circulator passes the output signal of the optical pumping unit to the optical amplifier via the optical transmission line.

Said optical pumping unit connected to the optical circulator may comprise a pumping source for generating pumped light and a drive circuit for driving the pumping source.

If optical circulators are respectively disposed on the input and output terminal sides of the optical transmission line of such an optical amplifying apparatus, signal light transmitted from the input terminal to the output terminal of the optical transmission line is amplified by the optical amplifier after passing through the optical circulator on the input terminal side and then passes through that optical isolator and then through the optical circulator on the output terminal side.

On the other hand, retrogressive light passes through the optical circulator on the output terminal side and then through the optical circulator on the input terminal side before getting to the input terminal of the optical transmission line without passing through the optical isolator.

Thus, it will be seen that signal light and retrogressive light can be independently isolated and combined together in an optical amplifying apparatus having a configuration as described above.

Now, the present invention will be described in greater detail by referring to the accompanying drawings that illustrate preferred embodiments of the invention.

### BRIEF DESCRIPTION OF THE DRAWINGS

Fig. 1 is a block diagram of an optical amplifying apparatus, outside the scope of the invention.

Fig. 2 is a schematic view of an optical device used in the apparatus of Fig. 1.

Fig. 3 is a graph showing the result of an experiment using the apparatus of Fig. 1 and a conventional optical amplifying apparatus along with an OTDR method.

Fig. 4 is a block diagram of a preferred embodiment of the invention.

Fig. 5 is a block diagram of another preferred embodiment of the invention.

Fig. 6 is a block diagram of a conventional optical amplifying apparatus.

### DETAILED DESCRIPTION OF THE INVENTION

The apparatus shown in Fig. 1 comprises an optical amplifier 1, an optical isolator 2 for suppressing oscillation of the optical amplifier caused by reflected signal light, an optical transmission line 3 for conveying light signal, optical devices 4, 5 for independently isolating and combining signal light and retrogressive light, an optical combiner 6 for combining signal light and pumped light, a pumping source 7 for optical amplification and a drive circuit 8 for driving the pumping source 7.

Of the above listed components, the optical amplifier 1, the optical combiner 6, the pumping source 7 and the drive circuit 8 constitute an optical amplifying unit 9.

The optical amplifier 1 may comprise an optical waveguide for optical amplification as illustrated in Fig. 1 or a known conventional laser amplifier (not shown).

An optical waveguide for optical amplification to be used for the optical amplifier 1 is typically a single mode optical fiber of a silica or fluoride-type comprising a core and a clad which are covered by a plastic layer.

The core of an optical waveguide to be used for the purpose of the invention is made of silica- or fluoride-type host glass which is doped with one or more than one rare earth elements such as erbium (E*r*) and neodymium (Nd). Additionally, one or more than one substances selected from a group of substances including alkaline earth elements such as beryllium (Be), oxides of yittrium-aluminum-garnet (YAG) alloys, oxides of yittrium-lanthanoid-fluorine (YLF) alloys, transition metal ions may be used for doping the host glass.

Alternatively, the core of the optical waveguide may be made of fluoride glass of an erbium- or neodymium-doped ZBLAN (ZrF₄-BaF₂-LaF₃-NaF) type or containing independently BaF₂, AlF₃ and/or NdF₃.

The clad layer of the optical waveguide is also made of silica- or fluoride type glass containing one or more than one doping substances as described above and obviously has a refractive index smaller than that of the core.

The optical isolator 2 is an optical device having no polarization dependency that can effectively suppress oscillation of the amplifier as described above.

The optical transmission line 3 may be an optical fiber of known type such as a silica- or fluoride type.

The optical devices 4, 5 are typically optical circulators comprising respectively a plurality of input/output ports 4₁-4₄ and 5₁-5₄ as illustrated in Fig. 2.

As seen from Fig. 2, the incident light that enters the optical device 4 through the port 4₁ goes out from the port 4₂ and the light that enters the device through the port 4₃ goes out from the port 4₄ whereas the light that enters the optical device 4 through the port 4₂ goes out from the port 4₃ and the light that enters the device through the port 4₄ goes out from the port 4₁.

Similarly, the incident light that enters the optical device 5 through the port 5₁ goes out from the port 5₂ and the light that enters the device through the port 5₃ goes out from the port 5₄ whereas the light that enters the optical device 5 through the port 5₂ goes out from the port 5₃ and the light that enters the device through the port 5₄ goes out from the port 5₁.

The optical combiner 6 comprises an optical coupler such as a wave division module (WDM) for combining signal light and pumped light.

The pumping source 7 typically comprises a semiconductor laser capable of oscillating to emit light with a required frequency band such as a 0.8µm band, 0.98µm band or 1.48µm band.

The optical amplifying apparatus as illustrated in Fig. 1 comprises a transmission route for signal light p1 from the input terminal (shown at the leftmost end) to the output terminal (shown at the rightmost end) of an optical transmission line 3 by way of ports 4₁ and 4₂ of an optical device 4, an optical combiner 6, an optical amplifier 1, an optical isolator 2 and two ports 5₁ and 5₂ of another optical device 5 and a transmission route for retrogressive light p2 from the output terminal (shown at the rightmost end) to the input terminal (shown at the leftmost end) of the optical transmission line 3 by way of ports 5₂ and 5₃ of an optical device 5 and two ports 4₄ and 4₁ of the optical device 4.

With an optical amplifying apparatus as illustrated in Fig. 1, signal light p1 entering from the input terminal of the optical transmission line 3 proceeds through the port 4₁, the inside of the optical device 4, the port 4₂, the optical combiner 6, the optical amplifier 1, the optical isolator 2, the port 5₁, the inside of the optical device 5 and the port 5₁ and goes out from the output terminal of the optical transmission line 3.

As signal light p1 passes through these components of the optical transmission line 3, pumped light p3 coming from the pumping source 7 which is driven (lit) by the drive circuit 8 enters the optical transmission line 3 by way of the optical combiner 6 to excite the optical amplifier 1 so that the signal light p1 passing through the optical amplifier is amplified by the latter.

On the other hand, retrogressive light p2 that proceeds in a direction opposite to that of signal light p1 passes the output terminal of the optical transmission line 3, the port 5₂, the inside of the optical device 5, the port 5₃, the port 4₄, the inside of the optical device 4 and the port 4₁ before it enters the input terminal of the optical transmission line 3 without passing through the optical isolator 2.

Consequently, signal light p1 and retrogressive light p2 can be independently isolated and combined by an optical amplifying apparatus as illustrated in Fig. 1.

Figs. 3(a) and 3(b) are graphs showing the result of an experiment using the apparatus of Fig. 1 and a conventional optical amplifying apparatus as illustrated in Fig. 5 along with an OTDR method.

In Figs. 3(a) and 3(b), the axis of ordinate represents the amount of returned light (dB) and that of ordinate represents the distance by which light is transmitted (km).

The unit of the ordinate (1 bit: 5dB) is a certain reference value.

For the experiment, an OTDR apparatus, a 17km long single mode optical fiber (having a core with a refractive index of 1.463000), an optical amplifying apparatus and a 20km long single mode optical fiber (having a core with a refractive index the same as that of the first optical fiber) were connected in the described order and ordinary procedures of measurement were followed.

The incoming light used for the experiment had a wavelength of 1.5µm and a distance of transmission of approximately 64km.

When the OTDR method was used with an optical amplifying apparatus of Fig. 1, the condition of the optical fiber connected downstream to the optical amplifying apparatus could be determined as illustrated in Fig. 3(a).

This is because the optical amplifying apparatus of Fig. 1 comprises optical devices 4, 5 and therefore retrogressive light p2 can be transmitted to the input terminal of the optical transmission line 3 regardless of the existence of an optical isolator 2.

When the OTDR method was used with an optical amplifying apparatus of Fig. 6, the condition of the optical fiber connected downstream to the optical amplifying apparatus could not be determined as illustrated in Fig. 3(b).

This is because the optical amplifying apparatus comprising an optical isolator is not provided with an optical circulator.

In an optical amplifying apparatus as shown in Fig. 1, an optical isolator 2 may be connected downstream to the optical device 1 and/or the optical amplifier 1 in order to reduce the reflection of signal light p1 as much as possible.

The optical device 4 connected to the input terminal of an optical amplifying apparatus of Fig. 1 may be omitted. Then, a given measuring means is connected to the port 5₃ of the optical device arranged near the output terminal of the apparatus.

Fig. 4 illustrates a preferred embodiment of the present invention.

While the optical amplifying apparatus of Fig. 4 is substantially similar to that of Fig. 1, the former differs from the latter in that an optical pumping unit 9 is connected to the port 5₄ of the optical device 5 of the former.

The optical pumping unit 9 of this embodiment does not comprise an optical combiner 6.

With an optical amplifying apparatus as illustrated in Fig. 4, signal light p1 entering from the input terminal of the optical transmission line 3 proceeds through the port 4₁, the inside of the optical device 4, the port 4₂, the optical amplifier 1, the optical isolator 2, the port 5₁, the inside of the optical device 5 and the port 5₂ and goes out from the output terminal of the optical transmission line 3 in the same way as described earlier by referring to the apparatus of Figure 1.

As signal light p1 passes through these components of the optical transmission line 3, pumped light p3 coming from the pumping source 7 which is driven (lit) by the drive circuit 8 enters the optical transmission line 3 by way of the port 5₄, the inside of the optical device 4 and the port 5₁ to excite the optical amplifier 1 so that the signal light p1 passing through the optical amplifier is amplified by the latter.

On the other hand, retrogressive light p2 that proceeds in a direction opposite to that of signal light p1 passes the output terminal of the optical transmission line 3, the port 5₂, the inside of the optical device 5, the port 5₃, the optical transmission line 3', the port 4₄, the inside of the optical device 4 and the port 4₁ before it enters the input terminal of the optical transmission line 3 without passing through the optical isolator 2.

Consequently, signal light p1 and retrogressive light p2 can be independently isolated and combined by an optical amplifying apparatus as illustrated in Fig. 4.

It will be apparent that the embodiment of Fig. 4 may be modified in various ways as in the case of the apparatus of Fig. 1.

Finally, a preferred embodiment illustrated in Fig. 5 will be described.

This embodiment is realized by adding an optical amplifying means between the ports 4₄ and 5₃ of the respective optical devices 4 and 5 of the embodiment of Fig. 4 in order to give it a bidirectional amplifying capability for accommodating bidirectional telecommunication.

In the embodiment of Fig. 5, an optical amplifier 1' and an optical isolator 2' are inserted into an optical transmission path comprising the ports 4₄ and 5₃ of respective optical devices 4 and 5 and optical pumping units 9₁ and 9₂ of the above described type are connected to the ports 4₃ and 5₄ of the respective optical devices 4 and 5 to form the optical amplifying means.

With an optical amplifying apparatus as illustrated in Fig. 5, signal light p1 entering from the leftmost terminal of the optical transmission line 3 proceeds through the port 4₁, the inside of the optical device 4, the port 4₂, the optical amplifier 1, the optical isolator 2, the port 5₁, the inside of the optical device 5 and the port 5₂ and goes out from the rightmost terminal of the optical transmission line 3.

Concurrently, pumped light p3 coming from the optical pumping unit 9₁ enters the optical transmission line 3 by way of the port 5₄, the inside of the optical device 4 and the port 5₁ to excite the optical amplifier 1 so that the signal light p1 passing through the optical amplifier is amplified by the latter.

With an optical amplifying apparatus as illustrated in Fig. 5, signal light p2 entering from the rightmost terminal of the optical transmission line 3 proceeds through the port 5₂, the inside of the optical device 5, the optical transmission line 3', the optical isolator 2', the optical amplifier 1', the port 4₄, the inside of the optical device 4 and the port 4₁ and goes out from the leftmost terminal of the optical transmission line 3.

Concurrently, pumped light p4 coming from the optical pumping unit 9₂ enters the optical transmission line 3' by way of the port 4₃, the inside of the optical device 4 and the port 4₄ to excite the optical amplifier 1' so that the signal light p2 passing through the optical amplifier is amplified by the latter.

Thus, an optical amplifying apparatus as shown in Fig. 5 has a bidirectional amplifying capability to accommodate bidirectional telecommunication.

Additionally, an optical amplifying apparatus according to the invention can be appropriately used with widely known backward and double side excitation techniques.

As signal light and retrogressive light can be independently isolated and combined together in an optical amplifying apparatus according to the invention, it can be used for bidirectional telecommunication, measurement and monitoring of various optical transmission systems utilizing retrogressive light and other applications.

## Claims (Claims for the following Contracting State(s): ES)

1. An optical amplifying apparatus comprising an input terminal (IN), an output terminal (OUT), an optical transmission line (3) connected between the input and output terminals, an optical amplifier (1) connected in the optical transmission line (3) for amplifying a light signal (P1) received on the input terminal (IN), and an optical isolator (2) connected in the optical transmission line (3) for suppressing oscillation of the optical amplifier (1) caused by any reflected light signal (P2), characterised in that an optical circulator (5) is connected in said optical transmission line (3) adjacent the output terminal (OUT), the optical circulator (5) being arranged to pass the amplified input light signal (P1) to the output terminal (OUT) and further arranged to pass the reflected light signal (P2) to an optical transmission line which bypasses the optical amplifier (1) and optical isolator (2).

2. An optical amplifying apparatus as claimed in claim 1, characterised in that a second optical circulator (4) is connected in said optical transmission line (3), adjacent said input terminal (IN), and is arranged to pass the input light signal (P1) along the optical transmission line (3) and to pass the reflected light signal (P2) on the bypass transmission line to said input terminal (IN).

3. An optical amplifying apparatus according to claim 1 or 2, characterised in that an optical pumping unit (7,8) for the optical amplifier (1) is connected to the optical transmission line (3) upstream of the optical amplifier (1).

4. An optical amplifying apparatus as claimed in claim 3, characterised in that the optical pumping unit (7,8) comprises a pumping source (7), a drive circuit (8) for driving the pumping source (8), and an optical combiner (6) for feeding pumped light to the optical amplifier (1).

5. An optical amplifying apparatus according to claim 1 or 2, characterised in that an optical pumping unit (7,8) for the optical amplifier (1) is connected to the optical circulator (5) adjacent the output terminal (OUT), such that the optical circulator (5) passes the output signal of the optical pumping unit (7,8) to the optical amplifier (1) via the optical transmission line (3).

6. An optical amplifying apparatus as claimed in claim 5, characterised in that the optical pumping unit (7,8) comprises a pumping source (7) and a drive circuit (8) for driving the pumping source (7).

## Claims (Claims for the following Contracting State(s): DE, FR, GB, IT)

1. An optical amplifying apparatus comprising an input terminal (IN), an output terminal (OUT), an optical transmission line (3) connected between the input and output terminals, an optical amplifier (1) connected in the optical transmission line (3) for amplifying a light signal (P1) received on the input terminal (IN), an optical pumping unit (9) for the optical amplifier (1), and an optical isolator (2) connected in the optical transmission line (3) for suppressing oscillation of the optical amplifier (1) caused by any reflected light signal (P2),
characterised in that an optical circulator (5) is connected in said optical transmission line (3) adjacent the output terminal (OUT), the optical circulator (5) being arranged to pass the amplified input light signal (P1) to the output terminal (OUT) and further arranged to pass the reflected light signal (P2) to an optical transmission line which bypasses the optical amplifier (1) and optical isolator (2), and said optical pumping unit (9) is connected to the optical circulator (5), such that the optical circulator (5) passes the output signal of the optical pumping unit (9) to the optical amplifier (1) via the optical transmission line (3).

2. An optical amplifying apparatus as claimed in claim 1, characterised in that a second optical circulator (4) is connected in said optical transmission line (3), adjacent said input terminal (IN), and is arranged to pass the input light signal (P1) along the optical transmission line (3) and to pass the reflected light signal (P") on the bypass transmission line to said input terminal (IN).

3. An optical amplifying apparatus as claimed in claim 1 or 2, characterised in that the optical pumping unit (9) comprises a pumping source (7) and a drive circuit (8) for driving the pumping source (7).

## Patentansprüche (Patentansprüche für folgende(n) Vertragsstaat(en): ES)

1. Optische Verstärkungsvorrichtung, die folgendes umfaßt: einen Eingangsanschluß (IN), einen Ausgangsanschluß (OUT), eine zwischen dem Eingangsanschluß und dem Ausgangsanschluß geschaltete optische Übertragungsleitung (3), einen in die optische Übertragungsleitung (3) geschalteten optischen Verstärker (1) zum Verstärken eines an dem Eingangsanschluß (IN) empfangenen Lichtsignals (P1) und einen in die optische Übertragungsleitung (3) geschalteten optischen Isolator (2) zum Unterdrücken von durch ein etwaiges reflektiertes Lichtsignal (P2) hervorgerufenen Schwingungen des optischen Verstärkers (1), dadurch gekennzeichnet, daß ein optischer Zirkulator (5) neben dem Ausgangsanschluß (OUT) in die optische Übertragungsleitung (3) geschaltet ist, wobei der optische Zirkulator (5) so ausgelegt ist, daß er das verstärkte Eingangslichtsignal (P1) zu dem Ausgangsanschluß (OUT) durchläßt, und weiterhin so ausgelegt ist, daß er das reflektierte Lichtsignal (P2) zu einer optischen Übertragungsleitung durchläßt, die den optischen Verstärker (1) und den optischen Isolator (2) überbrückt.

2. Optische Verstärkungsvorrichtung nach Anspruch 1, dadurch gekennzeichnet, daß ein zweiter optischer Zirkulator (4) neben dem Eingangsanschluß (IN) in die optische Übertragungsleitung (3) geschaltet ist und so ausgelegt ist, daß er das Eingangslichtsignal (P1) entlang der optischen Übertragungsleitung (3) durchläßt und das reflektierte Lichtsignal (P2) auf der überbrückenden Übertragungsleitung zu dem Eingangsanschluß (IN) durchläßt.

3. Optische Verstärkungsvorrichtung nach Anspruch 1 oder 2, dadurch gekennzeichnet, daß eine optische Pumpeinheit (7, 8) für den optischen Verstärker (1) oberhalb des optischen Verstärkers (1) an die optische Übertragungsleitung (3) angeschlossen ist.

4. Optische Verstärkungsvorrichtung nach Anspruch 3, dadurch gekennzeichnet, daß die optische Pumpeinheit (7, 8) eine Pumpquelle (7), eine Ansteuerschaltung (8) zum Ansteuern der Pumpquelle (8) und einen optischen Kombinator (6) zum Zuführen von gepumptem Licht zu dem optischen Verstärker (1) umfaßt.

5. Optische Verstärkungsvorrichtung nach Anspruch 1 oder 2, dadurch gekennzeichnet, daß eine optische Pumpeinheit (7, 8) für den optischen Verstärker (1) neben dem Ausgangsanschluß (OUT) derart an den optischen Zirkulator (5) angeschlossen ist, daß der optische Zirkulator (5) das Ausgangssignal der optischen Pumpeinheit (7, 8) über die optische Übertragungsleitung (3) zu dem optischen Verstärker (1) durchläßt.

6. Optische Verstärkungsvorrichtung nach Anspruch 5, dadurch gekennzeichnet, daß die optische Pumpeinheit (7, 8) eine Pumpquelle (7) und eine Ansteuerschaltung (8) zum Ansteuern der Pumpquelle (7) umfaßt.

## Patentansprüche (Patentansprüche für folgende(n) Vertragsstaat(en): DE, FR, GB, IT)

1. Optische Verstärkungsvorrichtung, die folgendes umfaßt: einen Eingangsanschluß (IN), einen Ausgangsanschluß (OUT), eine zwischen dem Eingangsanschluß und dem Ausgangsanschluß geschaltete optische Übertragungsleitung (3), einen in die optische Übertragungsleitung (3) geschalteten optischen Verstärker (1) zum Verstärken eines an dem Eingangsanschluß (IN) empfangenen Lichtsignals (P1), eine optische Pumpeinheit (9) für den optischen Verstärker (1) und einen in die optische Übertragungsleitung (3) geschalteten optischen Isolator (2) zum Unterdrücken von durch ein etwaiges reflektiertes Lichtsignal (P2) hervorgerufenen Schwingungen des optischen Verstärkers (1), dadurch gekennzeichnet, daß ein optischer Zirkulator (5) neben dem Ausgangsanschluß (OUT) in die optische Übertragungsleitung (3) geschaltet ist, wobei der optische Zirkulator (5) so ausgelegt ist, daß er das verstärkte Eingangslichtsignal (P1) zu dem Ausgangsanschluß (OUT) durchläßt, und weiterhin so ausgelegt ist, daß er das reflektierte Lichtsignal (P2) zu einer optischen Übertragungsleitung durchläßt, die den optischen Verstärker (1) und den optischen Isolator (2) überbrückt, und die optische Pumpeinheit (9) so an den optischen Zirkulator (5) angeschlossen ist, daß der optische Zirkulator (5) das Ausgangssignal der optischen Pumpeinheit (9) über die optische Übertragungsleitung zu dem optischen Verstärker (1) durchläßt.

2. Optische Verstärkungsvorrichtung nach Anspruch 1, dadurch gekennzeichnet, daß ein zweiter optischer Zirkulator (4) neben dem Eingangsanschluß (IN) in die optische Übertragungsleitung (3) geschaltet ist und so ausgelegt ist, daß er das Eingangslichtsignal (P1) entlang der optischen Übertragungsleitung (3) durchläßt und das reflektierte Lichtsignal (P2) auf der überbrückenden Übertragungsleitung zu dem Eingangsanschluß (IN) durchläßt.

3. Optische Verstärkungsvorrichtung nach Anspruch 1 oder 2, dadurch gekennzeichnet, daß die optische Pumpeinheit (9) eine Pumpquelle (7) und eine Ansteuerschaltung (8) zum Ansteuern der Pumpquelle (7) umfaßt.

## Revendications (Revendications pour l'(les) Etat(s) contractant(s) suivant(s): ES)

1. Appareil d'amplification optique comprenant une borne d'entrée (IN), une borne de sortie (OUT), une ligne de transmission optique (3) branchée entre les bornes d'entrée et de sortie, un amplificateur optique (1) branché dans la ligne de transmission optique (3) pour amplifier un signal lumineux (Pl) reçu sur la borne d'entrée (IN), et un isolateur optique (2) branché dans la ligne de transmission optique (3) pour supprimer les oscillations de l'amplificateur optique (1) causées par un quelconque signal lumineux réfléchi (P2), caractérisé en ce qu'un circulateur optique (5) est branché dans ladite ligne de transmission optique (3) à côté de la borne de sortie (OUT), le circulateur optique (5) étant disposé pour transmettre le signal lumineux d'entrée amplifié (P1) à la borne de sortie (OUT) et disposé en outre pour transmettre le signal lumineux réfléchi (P2) à une ligne de transmission optique qui établit une dérivation vis-à-vis de l'amplificateur optique (1) et de l'isolateur optique (2).

2. Appareil d'amplification optique selon la revendication 1, caractérisé en ce qu'un deuxième circulateur optique (4) est branché dans ladite ligne de transmission optique (3), à côté de ladite borne d'entrée (IN), et est disposé pour transmettre le signal lumineux d'entrée (P1) le long de la ligne de transmission optique (3) et pour transmettre le signal lumineux réfléchi (P2) à ladite borne d'entrée (IN), sur la ligne de transmission de dérivation.

3. Appareil d'amplification optique selon la revendication 1 ou 2, caractérisé en ce qu'une unité de pompage optique (7, 8) pour l'amplificateur optique (1) est branchée sur la ligne de transmission optique (3) en amont de l'amplificateur optique (1).

4. Appareil d'amplification optique selon la revendication 3, caractérisé en ce que l'unité de pompage optique (7, 8) comprend une source de pompage (7), un circuit d'excitation (8) pour exciter la source de pompage (8) et un combinateur optique (6) pour appliquer la lumière pompée à l'amplificateur optique (1).

5. Appareil d'amplification optique selon la revendication 1 ou 2, caractérisé en ce qu'une unité de pompage optique (7, 8) pour l'amplificateur optique (1) est branchée au circulateur optique (5) à côté de la borne de sortie (OUT), de telle sorte que le circulateur optique (5) transmette le signal de sortie de l'unité de pompage optique (7, 8) à l'amplificateur optique (1) par le biais de la ligne de transmission optique (3).

6. Appareil d'amplification optique selon la revendication 5, caractérisé en ce que l'unité de pompage optique (7, 8) comprend une source de pompage (7) et un circuit d'excitation (8) pour exciter la source de pompage (7).

## Revendications (Revendications pour l'(les) Etat(s) contractant(s) suivant(s): DE, FR, GB, IT)

1. Appareil d'amplification optique comprenant une borne d'entrée (IN), une borne de sortie (OUT), une ligne de transmission optique (3) branchée entre les bornes d'entrée et de sortie, un amplificateur optique (1) branché dans la ligne de transmission optique (3) pour amplifier un signal lumineux (Pl) reçu sur la borne d'entrée (IN), une unité de pompage optique (9) pour l'amplificateur optique (1), et un isolateur optique (2) branché dans la ligne de transmission optique (3) pour supprimer les oscillations de l'amplificateur optique (1) causées par un quelconque signal lumineux réfléchi (P2), caractérisé en ce qu'un circulateur optique (5) est branché dans ladite ligne de transmission optique (3) à côté de la borne de sortie (OUT), le circulateur optique (5) étant disposé pour transmettre le signal lumineux d'entrée amplifié (P1) à la borne de sortie (OUT) et disposé en outre pour transmettre le signal lumineux réfléchi (P2) à une ligne de transmission optique qui établit une dérivation vis-à-vis de l'amplificateur optique (1) et de l'isolateur optique (2), et ladite unité de pompage optique (9) est branchée au circulateur optique (5), de telle sorte que le circulateur optique (5) transmette le signal de sortie de l'unité de pompage optique (9) à l'amplificateur optique (1) par le biais de la ligne de transmission optique (3).

2. Appareil d'amplification optique selon la revendication 1, caractérisé en ce qu'un deuxième circulateur optique (4) est branché dans ladite ligne de transmission optique (3), à côté de ladite borne d'entrée (IN), et est disposé pour transmettre le signal lumineux d'entrée (P1) le long de la ligne de transmission optique (3) et pour transmettre le signal lumineux réfléchi (P2) à ladite borne d'entrée (IN), sur la ligne de transmission de dérivation.

3. Appareil d'amplification optique selon la revendication 1 ou 2, caractérisé en ce que l'unité de pompage optique (9) comprend une source de pompage (7) et un circuit d'excitation (8) pour exciter la source de pompage (8).
